Europäisches Patentamt

European Patent Office

Office européen des brevets

(19)

(11) EP 0 936 274 A1

(12) **DEMANDE DE BREVET EUROPEEN**

(43) Date de publication:
18.08.1999 Bulletin 1999/33

(51) Int. Cl.⁶: $C21D\ 8/02$, $B32B\ 15/01$

(21) Numéro de dépôt: 99103626.0

(22) Date de dépôt: 08.04.1993

(84) Etats contractants désignés:
**AT BE CH DE ES FR IT LI NL**

(30) Priorité: 16.04.1992 FR 9204697

(62) Numéro(s) de document de la (des) demande(s)
initiale(s) en application de l'article 76 CBE:
**93400930.9 / 0 566 457**

(71) Demandeur:
**CREUSOT-LOIRE INDUSTRIE**
**92800 Puteaux (FR)**

(72) Inventeurs:
• **Brisson, Jean-Georges**
**71200 Le Creusot (FR)**
• **Beguinot, Jean**
**71200 Le Creusot (FR)**

(74) Mandataire: **Bouget, Lucien et al**
**Cabinet Lavoix**
**2, Place d'Estienne d'Orves**
**75441 Paris Cédex 09 (FR)**

Remarques:
This application was filed on 25 - 02 - 1999 as a
divisional application to the application mentioned
under INID code 62.

(54) **Tôle plaquée ayant une bonne planéité et une résistance à l'abrasion améliorée**

(57) La tôle obtenue par le procédé selon la demande de brevet principal comporte une couche en acier à outil comprenant, en poids : plus de 0,5% C et plus de 3% de Cr et une couche en acier doux comprenant, en poids : moins de 0,25% de C et ayant un carbone équivalent inférieur à 0,5%. La couche en acier à outil à structure martensitique revenue contient une fine dispersion de carbures secondaires et est exempte de contraintes résiduelles de planage.

## Description

L'invention est relative à une tôle plaquée ayant une bonne planéité comportant une couche résistant à l'abrasion en acier à outil et une couche facilement soudable.

Dans les mines, les carrières, les travaux publics ou d'autres secteurs de l'industrie, il est connu d'utiliser des tôles plaquées ayant une couche résistant à l'abrasion, en acier à outil, et une couche facilement soudable en acier doux, pour réaliser des équipements tels que des blindages de trémie, des lames de niveleuses, ou d'autres dispositifs soumis à l'abrasion.

Ces tôles plaquées sont généralement obtenues par laminage et sont utilisées à l'état brut de refroidissement après laminage. Ces tôles plaquées ont la dureté maximale qu'il est possible d'obtenir et donc une très bonne tenue à l'abrasion. Mais il est souhaitable d'améliorer encore cette tenue à l'abrasion.

On connaît par le DD-A-244.360, un procédé de fabrication de plaques d'usure résistant à l'abrasion et soudables, par dépôt d'un acier à outil sur une base en acier de construction. La plaque d'usure peut être trempée à l'huile depuis une température comprise entre 1040 et 1100°C puis revenue à une température comprise entre 450 et 500°C.

Lors du refroidissement après laminage les plaques ou tôles plaquées forment une bilame et se déforment.

Lorsqu'on veut fabriquer des tôles plaquées bien planes, on doit, après le planage et le traitement thermique des tôles, réaliser une opération de planage pour éliminer la déformation due à l'effet de bilame inhérent à la liaison réalisée entre deux matériaux dont les propriétés de déformation, en particulier d'origine thermique, sont très différentes. En fait, il s'est avéré pratiquement impossible d'éliminer la flèche de tôles plaquées en acier de construction acier à outil par planage, du fait de la capacité d'allongement extrêmement réduite de ces tôles. Le planage se traduit généralement par une rupture de la tôle.

La présente invention est relative à une tôle plaquée ayant une bonne planéité et une résistance améliorée à l'abrasion qui est obtenue par le procédé tel que revendiqué dans la revendication 1 du brevet principal.

Le brevet principal est relatif à un procédé de fabrication d'une tôle plaquée comportant une couche résistant à l'abrasion en acier à outil et une couche facilement soudable en acier doux, dans lequel :

- on réalise un bloc constitué de deux plaques en acier à outil enserrées entre deux plaques en acier doux renfermant, en poids, moins de 0,25 % de carbone et ayant un carbone équivalent inférieur à 0,5 %, les plaques étant assemblées suivant un contour périphérique du bloc,
- on lamine le bloc à chaud,
- on refroidit à l'air le bloc laminé depuis une température de fin de laminage à chaud inférieure à 900°C jusqu'à une température inférieure à 200°C,
- on effectue un revenu du bloc laminé à une température comprise entre 450 et 650°C, et
- on découpe le bloc suivant son contour périphérique de manière à obtenir deux tôles plaquées, les tôles plaquées obtenues étant bien planes et ne nécessitant pas d'opération complémentaire de planage.

La température de revenu est comprise entre 450°C et 650°C et de préférence entre 500°C et 600°C.

L'acier à outil peut avoir une composition chimique telle que (en poids) :

$0,5 \% \leq C \leq 2,5 \%$
$3 \% \leq Cr \leq 16 \%$
$Mo \leq 2 \%$
$V \leq 2 \%$
$W \leq 2 \%$
$Mn \leq 2 \%$
$Ni \leq 3 \%$
$Si \leq 2 \%$

et de préférence :

$1 \% \leq C \leq 2 \%$
$8 \% \leq Cr \leq 13 \%$.

Les tôles plaquées selon l'invention sont bien planes, sont exemptes de contraintes résiduelles, sont facilement soudables sur une face et ont une résistance à l'abrasion améliorée sur l'autre face.

L'invention va maintenant être décrite plus en détail mais de façon non limitative.

Les plaques selon l'invention sont constituées d'une couche en acier doux soudable appelée base.

La famille des aciers à outils est très large et se caractérise principalement par une teneur en carbone supérieure à 0,5 % et en général inférieure à 2,5 % et une teneur en chrome comprise entre 3 % et 16 % ; cette combinaison permet d'obtenir un acier autotrempant ayant une structure martensitique très dure et pouvant contenir des carbures. Ces aciers peuvent également contenir des éléments carburigènes tels que le molybdène, le vanadium ou le tungstène en des teneurs généralement inférieures à 2 %. Ils contiennent en outre du manganèse (moins de 2 %) et du silicium (moins de 2 %) et peuvent contenir jusqu'à 3 % de nickel. De préférence la teneur en carbone est comprise entre 1 % et 2 % et le chrome entre 8 % et 13 %. Les fortes teneurs en chrome sont recherchées pour obtenir des carbures primaires qui précipitent à la solidification et qui sont assez grossiers (leur dimension est de l'ordre de 10 μm).

Les aciers doux utilisés pour réaliser la base sont des aciers de construction contenant du carbone, du silicium, du manganèse et éventuellement du chrome, du molybdène, du nickel, du vanadium, du cuivre et des impuretés. Pour être facilement soudables, les aciers contiennent moins de 0,25 % de carbone et ont un carbone équivalent :

$$C_{eq} = C + \frac{M_n}{6} + \frac{Cr + Mo}{5} + \frac{Ni + Cu + V}{15} \leq 0,50 \%$$

Pour réaliser une tôle plaquée selon l'invention, on réalise un bloc constitué de deux plaques ou inserts en acier à outil enserrés entre deux plaques ou bases en acier doux. L'ensemble est solidaire et fermé par un cordon de soudure périphérique selon une technique connue de l'homme de métier.

Le bloc est alors chauffé au-dessus de 1000°C et laminé à chaud pour obtenir un bloc laminé dont les dimensions correspondent aux dimensions des tôles qu'on veut obtenir. Le laminage se termine par exemple entre environ 800°C et 900°C.

On laisse refroidir à l'air le bloc laminé jusqu'à une température voisine de la température ambiante, par exemple 70°C et dans tous les cas inférieure à 200°C. Pendant ce refroidissement les plaques en acier à outil subissent une auto-trempe et acquièrent une structure martensitique très dure ; la couche en acier doux acquiert une structure du type ferrite-perlite.

Après le refroidissement on effectue sur le bloc laminé un revenu à une température comprise entre 450°C et 650°C et de préférence entre 500°C et 600°C afin de relaxer les contraintes induites dans les couches plaquées, d'adoucir la matrice martensitique et de faire précipiter des carbures secondaires.

La relaxation des contraintes se faisant dans un bloc fermé et bridé, se traduit par un planage des tôles plaquées.

Cet auto-planage thermique a donc pour résultat de corriger la déformation naturelle par effet bilame sans qu'on ait à réaliser une opération de planage sur planeuse mécanique, dangereuse sur ce type de produit dur et en tous les cas génératrices de fortes contraintes résiduelles.

La précipitation des carbures secondaires fins de dimension de l'ordre de 1 μm permet de limiter l'adoucissement de la matrice martensitique au revenu.

La température de revenu est choisie supérieure à 450°C car en-dessous la relaxation des contraintes est insuffisante et la précipitation des carbures secondaires est très faible. Elle ne dépasse pas 650°C car au-delà la structure martensitique est trop adoucie et parce qu'elle doit rester en-dessous de la température de transformation en austénite.

Après le revenu, le bloc laminé est découpé selon son pourtour, ce qui permet d'obtenir deux tôles plaquées bien planes selon l'invention qui ont une couche en acier doux soudable à structure ferrite-perlite et une couche en acier à outil très dure ayant une structure martensitique adoucie contenant une fine précipitation de carbures secondaires et, si les teneurs en carbone et en chrome sont suffisantes, des carbures primaires grossiers ayant précipité à la solidification.

On a constaté de façon surprenante que ces aciers à outils trempés à l'air et revenus avaient une résistance à l'abrasion très nettement supérieure à celle des mêmes aciers à outils bruts de trempe, a priori plus durs. Cela s'explique probablement par la fine précipitation de carbures de chrome.

A titre d'exemple on a réalisé des tôles plaquées dont la couche d'acier à outil était constituée d'un acier type D2 selon la norme américaine AISI et de composition :

| C | Si | Mn | Ni | Cr | Mo | V |
|---|----|----|-----|-----|-----|-----|
| 1,5 % | 0,34 % | 0,35 % | 0,19 % | 11,5 % | 0,72 % | 0,92 % |

La température de revenu était de 500°C et la dureté de la couche en acier à outil était de 54 HRC.

On a réalisé des essais comparatifs entre cette tôle plaquée et une tôle plaquée dont la couche d'acier à outil avait la même composition mais qui n'avait pas subi de revenu (brute de refroidissement) en faisant tourner des échantillons dans des granulats de quartz et en mesurant la perte de poids au bout d'un temps déterminé. On a constaté que la perte de poids de l'échantillon ayant subi un traitement de revenu était de 30 % inférieure à la perte de poids de l'échantillon brut de trempe soit une tenue à l'abrasion augmentée de 30 %.

## Revendications

1. Tôle plaquée ayant une bonne planéité et une résistance améliorée à l'abrasion obtenue par le procédé de la revendication 1 du brevet principal, caractérisée en ce qu'elle comporte une couche en acier à outil comprenant en sa composition chimique, en poids : plus de 0,5% de C et plus de 3 % de Cr et une couche en acier doux comprenant en sa composition chimique moins de 0,25 % de C et ayant un carbone équivalent inférieur à 0,5 %, et dont la couche en acier à outil ayant une structure martensitique revenue contient une fine dispersion de carbures secondaires, la tôle étant exempte de contraintes résiduelles de planage.

2. Tôle plaquée selon la revendication 1, caractérisée en ce que la structure de la couche d'acier à outil contient des carbures primaires grossiers.

3. Tôle plaquée selon les revendications 1 et 2, caractérisée en ce que l'acier à outil comporte en sa composition chimique, en poids.

   $0,5\% \leq C \leq 2,5\%$
   $3\% \leq Cr \leq 16\%$
   $Mo \leq 2\%$
   $V \leq 2\%$
   $W \leq 2\%$
   $Mn \leq 2\%$
   $Ni \leq 3\%$
   $Si \leq 2\%$

4. Tôle plaquée selon la revendication 3, caractérisée en ce que l'acier à outil comporte en sa composition chimique, en poids :

   $1\% \leq Cr \leq 2\%$ ; $8\% \leq Cr \leq 13\%$.

**Office européen des brevets**

## RAPPORT DE RECHERCHE EUROPEENNE

Numéro de la demande

EP 99 10 3626

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | DD 244 360 A (VEB EDELSTAHLWERK 8. MAI 1945 FREITAL) 1 avril 1987 * revendications 1-4 * | 1 | C21D8/02 B32B15/01 |
| A | DE 21 42 360 A (CREUSOT-LOIRE) 27 avril 1972 * revendications 1-4 * | 1 | |
| A | DE 23 09 871 A (BERGISCHE STAHL-INDUSTRIE) 29 août 1974 * revendications 1-3 * | 1 | |
| A | US 2 874 082 A (A. J. LENA ET AL.) 17 février 1959 * revendication 1 * | 1 | |
| A | JP 58 027860 A (NIPPON PISTON RING CO., LTD.) 18 février 1983 * le document en entier * -& DATABASE WPI Section Ch, Week 8313 Derwent Publications Ltd., London, GB; Class M27, AN 83-30714K XP002098407 & JP 58 027860 A (NIPPON PISTON RING CO LTD), 18 février 1983 * abrégé * | 1 | **DOMAINES TECHNIQUES RECHERCHES (Int.Cl.6)** C21D B32B |

Le présent rapport a été établi pour toutes les revendications

| Lieu de la recherche | Date d'achèvement de la recherche | Examinateur |
|---|---|---|
| BERLIN | 30 mars 1999 | Sutor, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 99 10 3626

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-03-1999

| Document brevet cité au rapport de recherche | Date de publication | Membre(s) de la famille de brevet(s) | Date de publication |
|---|---|---|---|
| DD 244360 A | 01-04-1987 | AUCUN | |
| DE 2142360 A | 27-04-1972 | FR 2106939 A<br>SE 369488 B | 05-05-1972<br>02-09-1974 |
| DE 2309871 A | 29-08-1974 | AUCUN | |
| US 2874082 A | 17-02-1959 | AUCUN | |
| JP 58027860 A | 18-02-1983 | AUCUN | |

EPO FORM P0460

Pour tout renseignement concernant cette annexe : voir Journal Officiel de l'Office européen des brevets, No.12/82